# EUROPÄISCHE PATENTSCHRIFT

(11) **EP 1 647 364 B1**
(45) Veröffentlichungstag und Bekanntmachung des Hinweises auf die Patenterteilung: **03.02.2010**
(21) Anmeldenummer: 05022424.5
(22) Anmeldetag: 14.10.2005
(51) Int. Cl.: B25B 5/16

(54) **Spannvorrichtung**
Clamping device
Dispositif de serrage

(30) Priorität: 15.10.2004 DE 202004016091 U
(43) Veröffentlichungstag der Anmeldung: 19.04.2006
(73) Patentinhaber: DE-STA-CO Europe GmbH, 61440 Oberursel (DE)
(72) Erfinder: Ulle, Detlev, 63477 Maintal (DE)
(74) Vertreter: Wolf, Günter

(56) Entgegenhaltungen:
- DE-A1- 4 236 670
- DE-A1- 4 417 333
- DE-A1- 10 222 008
- US-A1- 2004 149 060
- US-B1- 6 302 410

## Beschreibung

Die Erfindung betrifft eine Spannvorrichtung tür den Automo bilbau gemäß dem Oberbegriff des Patentanspruchs 1, die aus der DE 42 36 670 A1 bekannt ist.

Eine weitere Spannvorrichtung ist aus der DE 2 02 09 237 U1 bekannt.

Diese umfassen ein Antriebselement, das über eine in einem Gehäuse angeordnete Stellmechanik mit mindestens einem drehbar am Gehäuse gelagerten, werkstückseitig einen KonLaktbereich aufweisenden Spannwerkzeug wirkverbunden ist. Das erwähnte Gehäuse kann dabei wahlweise aus zwei schalenförmigen Teilen (siehe die DE 202 09 237 U1 oder aber auch gabelförmig (siehe die DE 42 36 670 A1) ausgebildet sein.

Das Antriebselement ist bei diesen Ausführungsformen als pneumatischer Druckzylinder ausgebildet. Für die erfindungsgemäße Spannvorrichtung kommen aber genauso gut manuell, elektrisch oder hydraulisch zu beLäLigende Antriebselemente in Betracht, was weiter unten noch genauer erläutert wird.

Die Stellmechanik gemäß der DE 202 09 237 U1 ist als sogenannte Kniehebelmechanik ausgebildet. Für die erfindungsgemäße Spannvorrichtung kommt genauso gut aber auch ein sogenannter Kurvenantrieb gemäß der DE 42 36 670 A1 in Betracht, was ebenfalls weiter unten noch genauer erläutert wird.

Der gewählte Begriff "Kontaktbereich" entspricht im wesentlichen der in der DE 42 36 670 A1 genannten Klemmbacke. Diese ist am als Spannarm ausgebildeten Spannwerkzeug in Form eines backenartigen Elements zum Halten bzw. Fixieren eines Werkstückes vorgesehen. Bei sogenannten Greiferwerkzcugcn werden diese Backen auch Greiferzähne genannt.

Diese Backen bzw. Greiferzähne werden bisher je nach Verwendungszweck wahlweise aus Metall oder Kunststoff gefertigt. Beim Einsatz derartiger Spannvorrichtungen zum Spannen bzw. Transportieren von gerade aus Öfen oder Warmformpressen entnommener Bleche oder dergleichen, hat sich allerding gezeigt, dass (Backen aus Kunststoff können in diesem Fall ohnehin nicht verwendet werden) metallische Backen die Wärme des Werkstücks zu sehr an das Spannwerkzeug (Spannarm) weitcrleiten. Da dieses regelmäßig aus einem vergüteten Stahl gebildet ist, wird es durch die Wärmeeinleitung ungewollt glashart bzw. spröde.

Der Erfindung liegt mithin die Aufgabe zugrunde, eine Spannvorrichtung der eingangs genannten Art auf möglichst einfache Weise dahingehend weiter zu bilden, dass diese auch beim hohen Werkstücktemperaturen möglichst lange, und zwar bei gleichzeitig minimalen Verschleiß- und Versprödungserscheinungen eingesetzt werden kann.

Diese Aufgabe ist mit einer Spannvorrichtung der eingangs ge nannten ArL durch die im Kennzeichen des Patentanspruchs 1 aufgeführten Merkmale gelöst.

Diese Maßgabe führt in überraschender weise zur Lösung der gestellten Aufgabe.

Aus der DE 100 18 117 A1 ist zwar ein modular aufgebauter Greifer mit einer keramischen Backe bekannt, dieser kommt aber bei der Produktion optischer Gläser zum Einsatz und dient dazu, die wärmeabfuhr vom Werkslück zu verhindern, da dieses an sonsten beschädigt würde (Eigenspannungen, Minderung der Glasqualität etc.). Außerdem ist dieser Greifer einer erheblich geringeren mechanischen Beanspruchung ausgesetzt, d. h. der Fachmann würde dieses Gebiet der Technik nicht nach geeigneten Lösungen für Spannvorrichtung für den Automobilbau durchsehen; und selbst wenn, würde er angesichts der gestellten Aufgabe, nämlich das Spannwerkzeug (insbesondere den Spannarm) vor Wärmezufuhr zu schützen, nicht auf die Idee kommen, keramische Backen für den Automobilbau zu nutzen.

Überraschender Weise sind die heute verfügbaren Keramiken durchaus in der Lago, den hohen Druckbelastungen, wie sie in im Automobilbau auftreten, stand zu halLen, verbunden mit dem Vorteil, dass eine Koramik im Vergleich zu herkömmlichen metaJ lischen Kontaktbereichen deutlich höhere thermische Belas tungen erträgt und Wärme schlechter an das Spannwerkzeug weiter leitet.

Andere vorteilhafte Weiterbildungen ergeben sich nach den ab-hängigen Patentansprüchen.

Die erfindungsgemäße Spannvorrichtung einschließlich ihrer vorteilhaften Weiterbildungen gemäß der abhängigen Patentansprüche wird nachfolgend anhand der zeichnerischen Darstellung eines Ausführungsbeispiels näher erläutert.

Es zeigt
- Figur 1: perspektivisch die erfindungsgemäße Spannvorrich tung mit Spannwerkzeug und Gegenhalter, jeweils mit keramischem Kontaktbereich;
- Figur 2: in Seitenansicht die Vorrichtung gemäß Figur 1;
- Figur 3: in Vorderansicht die Vorrichtung gemäß Figur 1;
- Figur 4: perspektivisch der keramische, am Kontaktbereichhalter angeordnete Kontaktbereich; und
- Figur 5: im Schnitt der Kontaktbereichhalter mit Kontaktbereich gemäß Figur 4.

In den Figuren ist eine bevorzugte Ausführungsform der erfindungsgemäßen Spannvorrichtung für den Automobilbau darge stellt. Diese umfasst ein Antriebselement 1, das über eine in einem Gehäuse 2 angeordnete Stellmechanik 3 mit mindestens einem drehbar am Gehäuse 2 gelagerten, werkstückseitig einen Kontaktbereich 5 aufweisenden Spannwerkzeug 4 wirkverbunden ist.

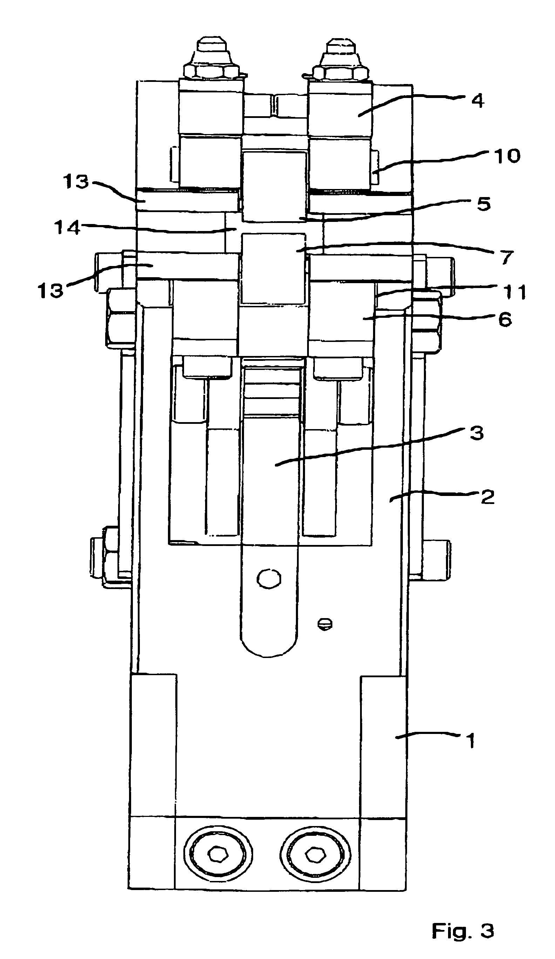

Das Antriebselement 1 ist beim dargestellten Ausführungsbel spiel als pneumatisch arbeitender Druckzylinder ausgebildet. Alternativ kommen aber auch elektrische, hydraulische oder sogar manuelle Antriebe in Betracht, und zwar insbesondere solche, die die Stellmechanik 3 mit einer linear gerichteten Kraft beaufschlagen. Da derartige Stellmechaniken 3 an sich bekannt sind (siehe zum Beispiel DE 42 36 670 A1), wird lediglich auf Figur 3 verwiesen, in der die als Kurvenantrieb ausgebildete Stellmechanik 3 teilweise erkennbar ist. Im Bedarfsfall kann die Stellmechanik 3 aber ebenso gut als sogenannte Kniehebelmechanik ausgebildet sein. Dieserhalb wird wieder auf die vorerwähnte DE 202 09 237 U1 verwiesen.

Wesentlich für die Spannvorrichtung ist nun, dass der Kontaktbereich 5 aus Keramik gebildet ist. Dank die ser Maßgabe ist es möglich, die Spannvorrichtung beispielsweise als Greifer zum Bewegen sehr heißer Bleche einzusetzen, oh nc dass dabei das Spannwerkzeug bzw. der Spannarm übermäßig erwärmt wird und dadurch versprödet.

Um die erwähnte Greiferfunktion zu realisieren, ist, wie in den Figuren dargestellt, vorgesehen, dass dem Spannwerkzeug 4 ein Gegenhalter 6 mit ebenfalls keramischem Kontaktbereich 7 zugeordnet ist. Ein beispielsweise zu bewegendes, heißes Blech kann also zwischen den beiden Kontaktbereichen 5, 7 (Klemmbacken) eingeklemmt und weiter transportiert werden.

Damit die keramischen Kontaktbereiche 5, 7 für diesen Zweck die erforderliche Festigkeit aufweisen, ist vorgesehen, dass diese aus Zirkoniumoxyd wahlweise mit Magnesiumoxyd MgO oder Yttriumoxyd Y₂O₃, aus siliziuminfiltriertem Siliziumkarbid oder aus drucklosgesintertem Siliciumkarbid gebildet sind. Weitere informationen zu diesen Werkstoffen finden sich derzeit unter http://www.acertec.de/frame_home.htm.

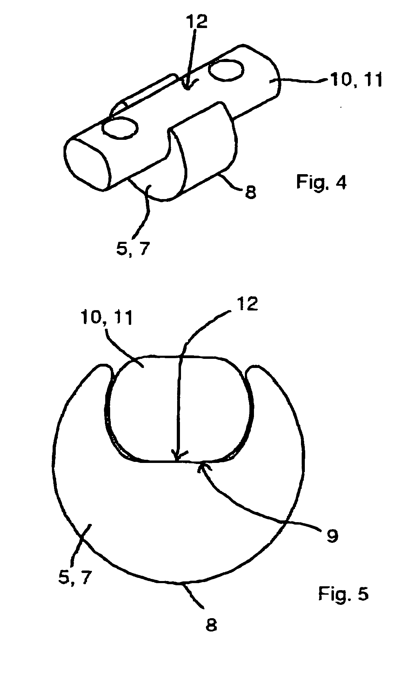

Zum Schutz der weiteren Komponenten der Spannvorrichtung gegen hohe Temperaturen, aber auch aus Festigkeitsgründen (Vermei dung von Kerbspannungen) ist, wie insbesondere in Figur 4 und 5 dargestellt, vorgesehen, dass jeder Kontaktbereich 5, 7 im Querschnitt gesehen angenähert nierenförmig ausgebildet ist, d. h. einen aussenliegenden, konvexen Abschnitt 8 als Kontaktfläche zu einem Werkstück und cinen innenliegenden, ebenflächigen Abschnitt 9 als Anlagefläche zu einem Kontaktbereichhalter 10, 11 aufweist.

Der Kontaktbereichhalter 10, 11 ist, wie insbesondere in Figur 4 dargestellt, vorzugsweise stabförmig, teilweise mit ebener Auflagefläche 12 für den innenliegenden Abschnitt 9 des Kontaktbereichs 5, 7 ausgebildet und am Spannwerkzeug 4 oder Gegenhalter 6 angeordnet ist. Ferner ist jeder Kontaktbereich 5, 7 zum Kontaktbereichhalter 10, 11 formschlüssig, aber vorzugs weise mit Toleranzzugabe ausgebildet (siehe hierzu insbesondere Figur 5) und umschließt diesen jeweils im Umfang mehr als 180°. Jeder Kontaktbereichhalter 10, 11 ist darüber hinaus zum Ausgleich von Wärmedehnungen verschieblich und mit Toleranzzugabe am Spannwerkzeug 4 oder gegebenenfalls am Gegenhalter 6 gelagert. Die Befestigung der Kontaktbereichhalter 10, 11 an der Spannvorrichtung erfolgt wahlweise direkt (siehe Gegenhalter 6) oder indirekt über weitere einstellbare Zwischenelemen-Le (siehe Spannwerkzeug 4).

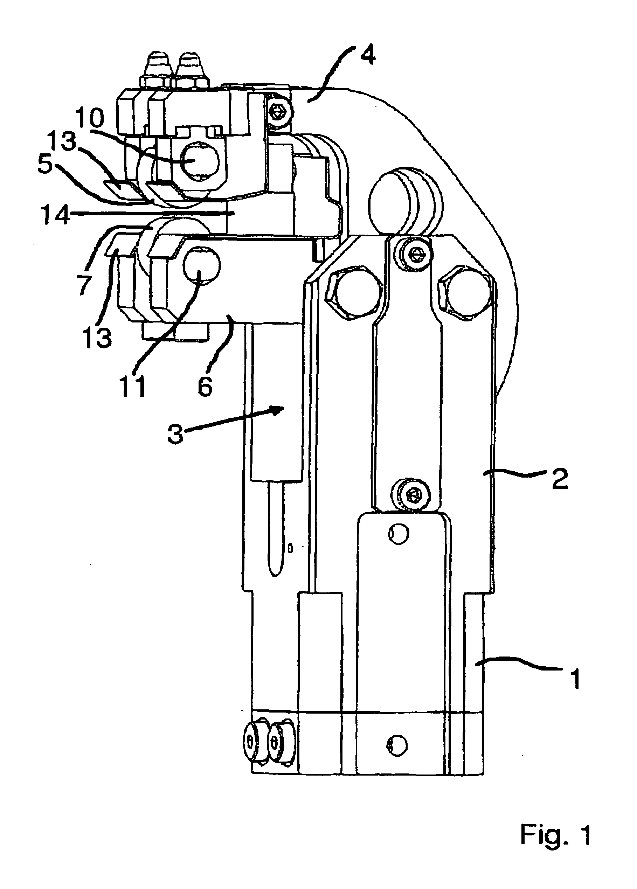

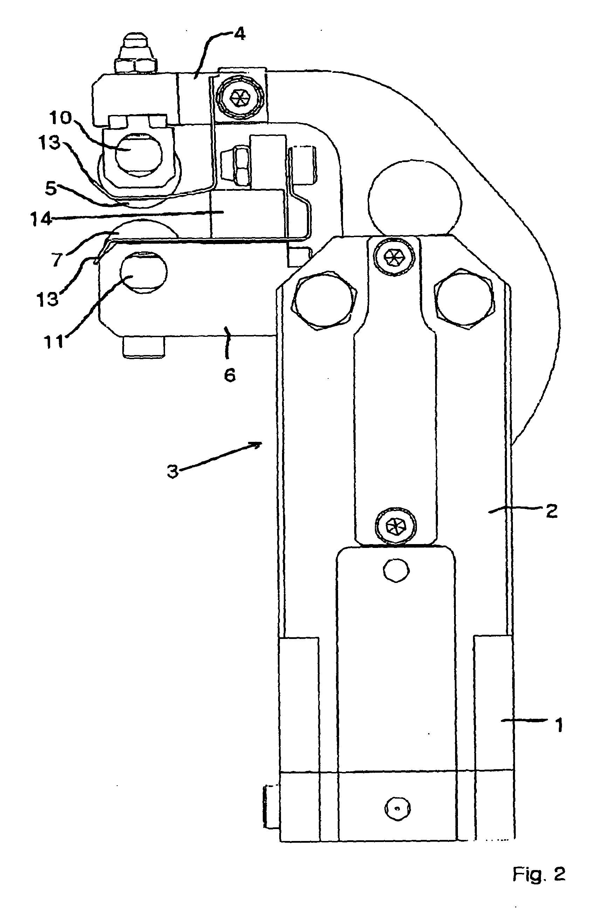

Zum weiteren Schutz gegen eine hohe Temperaturbelastung der Spannvorrichtung ist ferner vorgesehen (siehe hierzu, insbesondere die Figuren 1 bis 3), dass am Spannwerkzeug 4 und am Gegenhalter 6 ein lediglich den Kontaktbereich 5, 7 freilassendes Abschirmelement 13, vorzugsweise in Form eines Schutzhleches, angeordnet ist. Dieses Schutzblech hält von heißen Blechplatinen oder ähnlichem kommende Wärmestrahlung von der Spannvorrichtung ab und gewährleistet auf diese Weise eine noch längere Lebensdauer.

Schließlich ist zum weiteren thermischen und mechanischen Schutz der Spannvorrichtung zwischen Spannwerkzeug 4 und Gegenhalter 6 ein keramischer Werkstückanschlag 14 vorgesehen-Dieser ist am Gegenhalter 6 befestigt und definiert, wie weit beispielsweise eine heiße Blechplatine in den öffnungsbereich der Spannvorrichtung eingeschoben werden kann. Dieser Werkstückanschlag 14 ist vorzugsweise aus dem gleichen Material wie der Kontaktbereich 5, 7 gebildet.

### Bezugszeichenliste

- 1: Antriebselement
- 2: Gehäuse
- 3: Stellmechanik
- 4: Spannwerkzeug
- 5: Kontaktbereich
- 6: Gegenhalter
- 7: Kontaktbereich
- 8: konvexer Abschnitt
- 9: ebenflächiger Abschnitt
- 10: Kontaktbereichhalter
- 11: Kontaktbereichhalter
- 12: Auflagefläche
- 13: Abschirmelement
- 14: Werkstückanschlag

## Patentansprüche

1. Spannvorrichtung für den Automobilbau, umfassend ein Antriebselement (1), das über eine wahlweise als Kurvenantrieb oder als Kniehebelmechanik ausgebildete, in einem Gehäuse (2) angeordnete Stellmechanik (3) mit mindestens einem drehbar am Gehäuse (2) gelagerten, werkstückseitig einen Kontaktbereich (5) aufweisenden Spannwerkzeug (4) wirkverbunden ist, dem ein Gegenhalter (6) mit Kontaktbereich (7) zugeordnet ist,
**dadurch gekennzeichnet,**
**dass** die Kontaktbereiche (5) aus Keramik gebildet sind, wobei jeder Kontaktbereich (5, 7) aus Zirkonium-oxyd wahlweise mit Magnesiumoxyd (MgO) oder Yttriumoxyd (Y₂O₃), aus siliziuminfiltriertem Siliziumkarbid oder aus drucklosgesintertem Siliciumkarbid gebildet ist.

2. Spannvorrichtung nach Anspruch 1,
**dadurch gekennzeichnet,**
**dass** jeder Kontaktbereich (5, 7) im Querschnitt gesehen einen aussenliegenden, konvexen Abschnitt (8) als Kontaktfläche zu einem Werkstück und einen innenliegenden, ebenflächigen Abschnitt (9) als Anlagefläche zu einem Kontaktbereichhalter (10, 11) aufweist.

3. Spannvorrichtung nach Anspruch 2,
**dadurch gekennzeichnet,**
**dass** jeder Kontaktbereichhalter (10, 11) stabförmig, teilweise mit ebener Auflagefläche (12) für den innenliegenden Abschnitt (9) des Kontaktbereichs (5, 7) ausgebildet und am Spannwerkzeug (4) oder Gegenhalter (6) angeordnet ist.

4. Spannvorrichtung nach Anspruch 2 oder 3,
**dadurch gekennzeichnet,**
**dass** jeder Kontaktbereich (5, 7) den Kontaktbereichhalter (10, 11) im Umfang mehr als 180° umschliessend ausgebildet ist.

5. Spannvorrichtung nach einem der Ansprüche 2 bis 4,
**dadurch gekennzeichnet,**
**dass** jeder Kontaktbereich (5, 7) zum Kontaktbereichhalter (10, 11) formschlüssig ausgebildet ist.

6. Spannvorrichtung nach einem der Ansprüche 2 bis 5,
**dadurch gekennzeichnet,**
**dass** zum Ausgleich von Wärmedehnungen jeder Kontaktbereich (5, 7) mit Toleranzzugabe am Kontaktbereichhalter (10, 11) angeordnet ist.

7. Spannvorrichtung nach einem der Ansprüche 2 bis 6,
**dadurch gekennzeichnet,**
**dass** der Kontaktbereichhalter (10, 11) zum Ausgleich von Wärmedehnungen verschieblich am Spannwerkzeug (4) oder gegebenenfalls am Gegenhalter (6) gelagert ist.

8. Spannvorrichtung nach einem der Ansprüche 2 bis 7,
**dadurch gekennzeichnet,**
**dass** am Spannwerkzeug (4) und gegebenenfalls am Gegenhalter (6) ein lediglich den Kontaktbereich (5, 7) freilassendes Abschirmelement (13), vorzugsweise in Form eines Schutzbleches, vorgesehen ist.

9. Spannvorrichtung nach einem der Ansprüche 2 bis 8,
**dadurch gekennzeichnet,**
**dass** zwischen Spannwerkzeug (4) und Gegenhalter (6) ein keramischer Werkstückanschlag (14) vorgesehen ist.

## Claims

1. Clamping device for automobile manufacture, comprising a drive element (1), which is functionally connected by means of an actuating mechanism (3), which is configured optionally as a cam drive or as a toggle mechanism and is arranged in a housing (2), to at least one clamping tool (4), which is mounted in a rotatable manner on the housing (2), has a contact region (5) on the tool side and is associated with a counter brace (6) with a contact region (7),
**characterised in that**
the contact regions (5) are formed from ceramic, wherein each contact region (5, 7) is formed from zirconium oxide optionally with magnesium oxide (MgO) or yttrium oxide (Y₂O₃), from silicon-infiltrated silicon carbide or from pressurelessly sintered silicon carbide.

2. Clamping device according to Claim 1,
**characterised in that**
each contact region (5, 7) has, seen in cross section, an outer convex section (8) as the contact face for a workpiece and an inner flat section (9) as the bearing face for a contact region holder (10, 11).

3. Clamping device according to Claim 2,
**characterised in that**
each contact region holder (10, 11) has a rod-shaped configuration, partially with a flat bearing face (12) for the inner section (9) of the contact region (5, 7) and is arranged on the clamping tool (4) or counter brace (6).

4. Clamping device according to Claim 2 or 3,
**characterised in that**
each contact region (5, 7) is configured so as to enclose more than 180° of the circumference of the contact region holder (10, 11).

5. Clamping device according to one of Claims 2 to 4,
**characterised in that**
each contact region (5, 7) is configured in a form-fitting manner with respect to the contact region holder (10, 11).

6. Clamping device according to one of Claims 2 to 5,
**characterised in that**
each contact region (5, 7) is arranged on the contact region holder (10, 11) with added tolerance in order to compensate thermal expansion.

7. Clamping device according to one of Claims 2 to 6,
**characterised in that**
the contact region holder (10, 11) is mounted displaceably on the clamping tool (4) or if required on the counter brace (6) in order to compensate thermal expansion.

8. Clamping device according to one of Claims 2 to 7,
**characterised in that**
a screening element (13), preferably in the form of a protective plate, which only leaves the contact region (5, 7) free is provided on the clamping tool (4) and if required on the counter brace (6).

9. Clamping device according to one of Claims 2 to 8,
**characterised in that**
a ceramic workpiece stop (14) is provided between the clamping tool (4) and the counter brace (6).

## Revendications

1. Dispositif de serrage pour la construction automobile, comprenant un élément d'entraînement (1), qui est relié opérationnellement par l'intermédiaire d'un mécanisme de réglage (3) disposé dans un logement, réalisé au choix comme un entraînement à came ou comme un mécanisme à genouillère à au moins un outil de serrage (4) présentant une zone de contact (5) du côté de la pièce, positionné au moins rotativement sur le logement (2), auquel est coordonnée une contre-pointe (6) avec une zone de contact (7),
**caractérisé en ce que**
les zones de contact (5) sont formées en céramique, moyennant quoi chaque zone de contact (5, 7) est formée en oxyde de zirconium avec au choix de l'oxyde de magnésium (MgO) ou de l'oxyde d'yttrium (Y₂O₃), en carbure de silicium infiltré au silicium ou en carbure de silicium fritté sans pression.

2. Dispositif de serrage selon la revendication 1,
**caractérisé en ce que**
chaque zone de contact (5, 7) présente vue en coupe transversale une portion (8) convexe, tournée vers l'extérieur comme surface de contact avec une pièce et une portion (9) plate, tournée vers l'intérieur comme surface d'appui sur un support de zone de contact (10, 11).

3. Dispositif de serrage selon la revendication 2,
**caractérisé en ce que**
chaque support de zone de contact (10, 11) est réalisé en forme de barre, partiellement avec une surface d'appui plane (12) destinée à la portion tournée vers l'intérieur (9) de la zone de contact (5, 7) et est disposé sur l'outil de serrage (4) ou la contre-pointe (6).

4. Dispositif de serrage selon la revendication 2 ou 3,
**caractérisé en ce que**
chaque zone de contact (5, 7) est réalisée comme englobant le support de zone de contact (10, 11) sur la circonférence de plus de 180°.

5. Dispositif de serrage selon une des revendications 2 à 4,
**caractérisé en que**
chaque zone de contact (5, 7) est réalisée avec conjonction de forme par rapport au support de zone de contact (10, 11).

6. Dispositif de serrage selon une des revendications 2 à 5,
**caractérisé en ce que**
à des fins de compensation des dilatations thermiques, chaque zone de contact (5, 7) est disposée avec une tolérance sur le support de zone de contact (10, 11).

7. Dispositif de serrage selon une des revendications 2 à 6,
**caractérisé en ce que**
le support de zone de contact (10,11) est positionné à des fins de compensation des dilatations thermiques de manière déplaçable sur l'outil de serrage (4) ou le cas échéant sur la contre-pointe (6).

8. Dispositif de serrage selon une des revendications 2 à 7,
**caractérisé en ce que**
sur l'outil de serrage (4) et le cas échéant sur la contre-pointe (6), un élément faisant écran (13) laissant à découvert uniquement la zone de contact (5, 7) est prévu, de préférence sous la forme d'une tôle de protection.

9. Dispositif de serrage selon une des revendications 2 à 8,
**caractérisé en ce que**
entre l'outil de serrage (4) et la contre-pointe (6), une butée de pièces en céramique (14) est prévue.
